# EUROPEAN PATENT SPECIFICATION

(11) **EP 0 815 526 B1**
(45) Date of publication and mention of the grant of the patent: **28.05.2003**
(21) Application number: 96923181.0
(22) Date of filing: 16.01.1996
(51) Int. Cl.: G06F 17/60, G06F 1/00

(54) **DEFERRED BILLING, BROADCAST, ELECTRONIC DOCUMENT DISTRIBUTION SYSTEM AND METHOD**
SYSTEM UND METHODE ZUR VERTEILUNG, ÜBERSENDUNG UND GESAMTABBRECHUNG VON ELEKTRONISCHEN DOKUMENTEN
SYSTEME ET PROCEDE DE DISTRIBUTION DE DOCUMENTS ELECTRONIQUES, DE DIFFUSION ET DE FACTURATION EN DIFFERE

(43) Date of publication of application: 07.01.1998
(73) Proprietor: Hughes Electronics Corporation, El Segundo, California 90245-0956 (US)
(72) Inventor: DILLON, Douglas, M., Gaithersburg, MD 20879 (US)
(74) Representative: Jackson, Richard Eric
(86) International application number: US9600579
(87) International publication number: WO97026611

(56) References cited:
- EP-A- 0 411 538
- EP-A- 0 491 068
- WO-A-90/02382
- US-A- 4 992 940
- US-A- 5 247 575
- US-A- 5 319 542
- US-A- 5 339 239
- US-A- 5 410 598
- US-A- 5 416 840
- US-A- 5 418 782
- US-A- 5 497 479
- US-A- 5 499 298
- US-A- 5 509 074
- US-A- 5 563 946
- DATABASE INSPEC INSTITUTION OF ELECTRICAL ENGINEERS, STEVENAGE, GB Inspec No. AN 5316507, DENG R.H. ET AL.: "Authenticated key distribution and secure broadcast using no conventional encryption algorithm: a unified approach based on block codes" XP002092371 & PROC. IEEE GLOBAL TELECOMMUNICATIONS CONFERENCE (CAT. NO. 95CH35756), vol. 2, 13 - 17 November 1995, pages 1193-1197,

## Description

### Background of the Invention

This application relates to a computer network and, more specifically, to a method and apparatus for implementing an electronic document delivery system where both documents and billing information are encrypted during transmission.

An electronic document delivery system transmits documents from a central depository to individual nodes or receiving computers. In some conventional document delivery systems, a user accesses a computer at the central depository, examines a list of available documents stored at the central depository, and requests that one or more of the documents be transmitted to him. In other conventional document delivery systems, a predetermined group of documents are sent from the central depository to the user and stored on the user's system. The user is then free to examine documents in the predetermined group. Still other conventional electronic document delivery systems can be used to send only certain types of documents, such as text-only documents.

Some electronic document delivery systems transmit documents to the user in encrypted form. The encrypted documents are received at the receiving computer and stored in a memory. Thereafter, the documents are decrypted and the decrypted form of the documents are also stored in a memory. Such double storage of documents is wasteful of memory and storage space.

What is needed is an electronic document delivery system in which a user can determine which documents he wishes to receive and in which the user is charged only for those documents that he receives. It is also desirable to allow the user to designate which documents he wishes to receive without having to access a central computer to view a list of available documents. Furthermore, it is desirable that such a system use encryption for all critical information passing between the central computer and the receiving computer. It also is desirable to avoid having both an encrypted and a decrypted version of a document stored at the receiving computer, as this is wasteful of memory space.

WO 90/02382 discloses an information distribution system for providing information to a user. When the information corresponds to criteria individually selected by the user, the user is charged only for the selected information thus provided. Encrypted information packages (IP's) are provided at the user site, via high and/or low density storage media and/or by broadcast transmission. The IP's selected by the user are decrypted and then printed or displayed for viewing by the user. The charges for the IP's thus displayed are accumulated within the user apparatus and periodically reported by telephone to the system's central accounting facility which issues encryption keys. The encryption keys, used to decrypt the IP's, are changed periodically. If the central accounting facility has not issued a new encryption key for a particular user station, the station is unable to retrieve information from the system when the key is changed.

### Summary of the Invention

The present invention overcomes the problems and disadvantages of the prior art by having a central computer (or "broadcast center") periodically send a "catalog" of available documents to a receiving computer. The user can then browse through the available documents without having to access the broadcast center. The documents are transmitted as packets, and the packets are decrypted as soon as they are received, eliminating the need to store both an encrypted and a decrypted version of the documents at the receiving computer. Moreover, the invention is not limited to text-only documents and can receive all types of documents, such as software, images, text, and full-motion video. The receiving computer periodically receives information allowing it to decrypt received documents and to encrypt billing information to be sent to the broadcast center.

A purpose of the present invention is to allow all forms of electronic documents to be distributed in a cost-effective manner using broadcast technology in a way that prevents access to a document without paying for it.

In accordance with the purpose of the invention, as embodied and broadly described herein, the invention resides in a receiving apparatus for use in a document delivery system having a broadcast apparatus that sends a document as a plurality of encrypted packets and sends account information including key seeds to said receiving apparatus without said receiving apparatus having requested the document, said receiving apparatus comprising:
a memory;
a receiving unit that receives and decrypts the encrypted packets and stores only the decrypted packets in said memory; and
a security engine that generates keys used by said receiving unit to decrypt the encrypted packets in accordance with a one-way hashing method based on a document identification number of the document and one of the key seeds,
wherein
the broadcast apparatus sends the document identification number in an announcement message prior to sending the document;

In yet another broad aspect of the invention, there is provided a method for document delivery in a network system, including the steps of:
sending, by a broadcast center in the network, a document as a plurality of encrypted packets;
connecting a communication link to the broadcast center;
decrypting a received packet, in a receiving computer connected to the communication link, the receiving computer including a memory and a broadcast receiver,
wherein the broadest receiver performs the decrypting step on the packet as it is received and stores only the decrypted received packet in memory so as to reassemble the document in order;
sending, by the broadcast center, account information including key seeds to a security engine in the receiving computer; and
generating, by the security engine, keys used by the broadcast receiver to decrypt the received packets in accordance with a one-way hashing method based on a document number of the sent document and one of the key seeds,
wherein.
the broadcast center sends the document identification number in an announcement message prior to sending the document:

It is understood that both the foregoing general description and the following detailed description are exemplary and explanatory and are intended to provide further explanation of the invention as claimed.

### Brief Description of the Drawings

The accompanying drawings, which are incorporated in and constitute a part of this specification, illustrate several embodiments of the invention and, together with the description, serve to explain the principles of the invention.
Fig. 1 is a hardware block diagram;
Fig. 2 is a detailed hardware block diagram of a broadcast center of Fig. 1;
Fig. 3 is a detailed hardware block diagram of a security engine of Fig. 1;
Fig. 4 is a detailed hardware block diagram of a receiving computer of Fig. 1;
Fig. 5 is a timing chart showing the overall operation of disclosed embodiments;
Fig. 6 is a flowchart of steps performed by the broadcast receiver of Fig. 1 in the function of receiving and decrypting packet information;
Figs. 7(a) and 7(b) are flowcharts of steps performed by the file broadcast receiver of Figs. 1 and 4 in the functions of receiving an announcement message and sending a load request, and receiving and processing a decrypted packet from the broadcast receiver;
Fig. 8 is a flowchart of steps performed by the security engine of Fig. 3 in the function of receiving and processing a load request from the file broadcast receiver; and
Fig. 9 is a flowchart of steps performed by the file browser of Figs. 1 and 4 in the function of displaying a catalog and processing document requests.

### Detailed Description of the Preferred Embodiments

Reference will now be made in detail to the preferred embodiments of the invention, examples of which are illustrated in the accompanying drawings. Wherever possible, the same reference numbers will be used throughout the drawings to refer to the same or like parts.

### a. General Overview

The following is a general discussion of networking hardware used in a preferred embodiment of a receiving apparatus.

Disclosed herein is a communication link between a broadcast center computer and a plurality of document receiving computers is implemented using satellite technology to implement a high-speed one way link between the document receiving computer and the broadcast center. This high-speed link is used to download documents and data from the network. The receiving computer also has a conventional link such as a dial-up modem and telephone line sending data to the network. The receiving apparatus can use various forms of high-speed, one-way links, such as satellites, and cable television lines. The receiving apparatus can 'use various forms of low-speed networks, such as TCP/IP networks, dial-up telephones, ISDN D-channel, CPDP, and low-speed satellite paths.

The described embodiment of the receiving apparatus uses satellites to provide a high-speed one-way link. Satellites can cover large geographical areas and are insensitive to the distance between a transmitter and a receiver. In addition, satellites are very efficient at point-to-point applications and broadcast applications, and are resilient and resistant to man-made disasters. Two-way satellites are expensive to use, however, because of the costs involved in purchasing and installing satellite ground terminal hardware. In the past, these costs have placed satellite communications outside the reach of an individual consumer.

The receiving apparatus allows a personal computer to receive downloaded information from the network via a satellite at a very practical cost.

The cost of satellite communications is reduced because a one-way satellite link is used. Receive-only earth station equipment is cheaper to manufacture because it requires less electronics than send/receive antennae.

### b. The Electronic Document Delivery System

The following paragraphs present a brief overview of a preferred embodiment of a receiving apparatus. A more detailed description follows thereafter.

An electronic document delivery system is disclosed in which a central broadcast center broadcasts documents on a predetermined schedule. Documents can include various types of files or data, including software, images, text, and full-motion video. Periodically, a catalog of documents to be sent during an upcoming time period is sent by the broadcast center to a plurality of receiving computers. Users of the receiving computers, either human beings or other computers, designate which documents in the catalog they wish to receive. Sometime later, the broadcast center broadcasts, in encrypted form, each of the documents listed in the catalog. As each document is received by a receiving computer, the receiving computer determines whether one or more of its users have designated the document as a document from the catalog that they would like to receive. If the document was designated by the user, the receiving computer decrypts the document and stores billing information about the received document. The billing information will be transferred back to the broadcast center at a later time.

The following paragraphs provide a more detailed description of a preferred embodiment of a receiving apparatus.

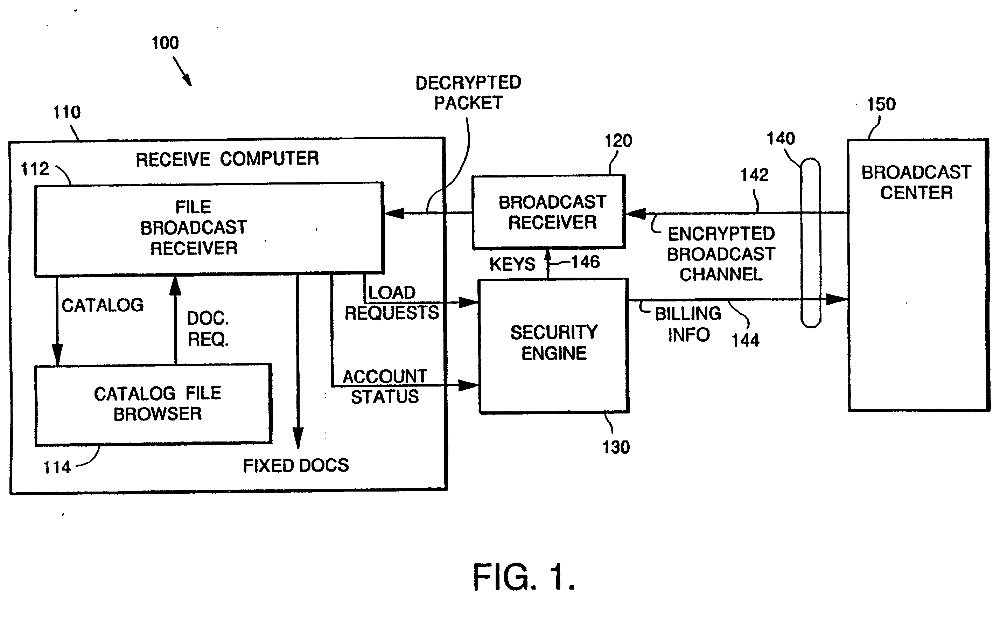

Fig. 1 is a hardware block diagram 100, which includes a receiving computer 110, which is one of the plurality of receiving computers, a broadcast receiver 120, a security engine 130, a communications link 140, and a broadcast center 150. Receiving computer 110 includes a file broadcast receiver 112 and a file browser 114.

Communications link 140 preferably is a combination of a satellite broadcast channel plus a dial-up telephone line. In another embodiment use of a vertical blanking interval of broadcast television to carry the broadcast data is disclosed.

In Fig. 1, communications link 140 includes an incoming link 142 carrying encrypted and non-encrypted data packets and an outgoing link 144 carrying encrypted billing information as discussed below.

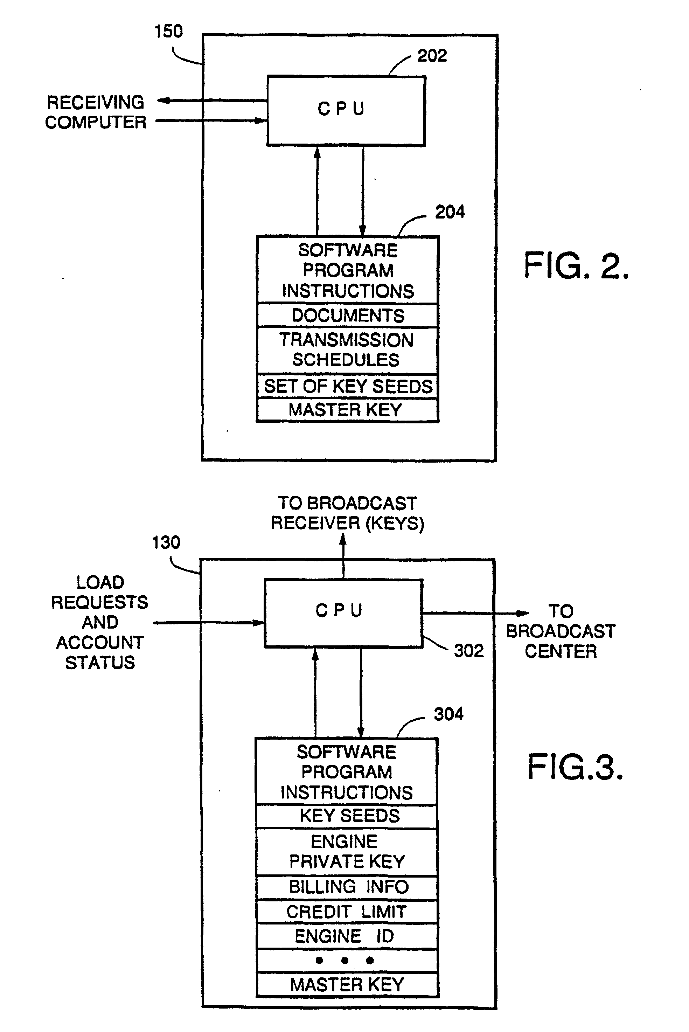

Fig. 2 is a detailed hardware block diagram of broadcast center 150 of Fig. 1. As shown in Fig. 2, broadcast center 150 is preferably a general purpose computer including a CPU 202 and a memory 204. CPU 202 can be any type of known CPU that is capable of performing the functions described below in connection with broadcast center 150. Similarly, memory 204 is a generally known type of memory capable of holding information, such as RAM, ROM, a floppy disk, a hard disk, etc.

Memory 204 includes a software program that is executed by CPU 202 to perform functions F1, F2, F3, and F4, as described in connection with the table below. Memory 204 also includes a plurality of documents capable of being sent to ones of the receiving stations over communication link 140. Memory 204 also includes information about all documents available to be sent by broadcast center 150, such as document name, document length, origin of the document, ownership of the document, schedule on which the document is to be transmitted (e.g., periodically, or at a predetermined time or date), cost to a user of receiving the document, access control information indicating which receivers are authorized to receive the document, etc. The specific data and the format of the data stored in memory 204 may vary. Memory 204 also includes a set of key seeds to be sent to security engine 130 of receiving computer 110, as described below.

Fig. 3 is a detailed hardware block diagram of security engine 130 of Fig. 1. As shown in Fig. 3, security engine 130 is preferably a general purpose computer including a CPU 302 and a memory 304. CPU 302 can be any type of known CPU that is capable of performing the functions described below in connection with security engine 130. Similarly, memory 304 is a generally known type of memory capable of holding information, such as RAM, ROM, a floppy disk, a hard disk, etc.

Security engine 130 preferably is a physically secure computer. Thus, it is physically locked or otherwise rendered physically inaccessible by unauthorized persons and its memory is not accessible to other computers or CPUs. Ensuring that security engine 130 is physically secure ensures that people only receive documents they will be billed for because the master key used to decrypt key sets and the key sets themselves are physically secure. A smart card is an example of such a security engine. Dallas Semiconductor "DS2252T Secure Micro Stik" is another. In one implementation of the invention, to reduce cost, link 144 is omitted and billing information is sent to broadcasting center 150 by way of receiving computer 110. In yet another implementation, the security engine may be integrated with the receiver to reduce cost and to maintain the secrecy of the keys.

Memory 304 includes a software program that is executed by CPU 302 to perform functions F10, F11, and F12 described in connection with the table below.

Software based encryption preferably is used because the amount of data to be encrypted and decrypted by the security engine is relatively small and relatively slow encryption and decryption is acceptable. In contrast, broadcast receiver 120 preferably implements a decryption algorithm in hardware using a symmetrical encoding scheme, such as the Data Encryption Standard (DES) Electronic Codebook implemented under Federal Standard 10-26, as shown in Telecommunications: Compatibility Requirements for Use of Data Encryption Standards, published December 11, 1978 by the General Services Administration.

Memory 304 also includes an engine ID (a code uniquely identifying the security engine), an engine master key (for decrypting the account status information received from broadcast center 150 and for encrypting billing information and checksum to be sent to broadcast center 150), document ID data identifying a document requested by the user from the catalog (received as part of a load request) key seeds for generating keys to decode the documents listed in the catalog, account information received from broadcast center 150, billing information for documents received since billing information was most recently received from broadcast center 150, and a credit limit received from broadcast center 150. The specific data and the format of the data stored in memory 304 may vary.

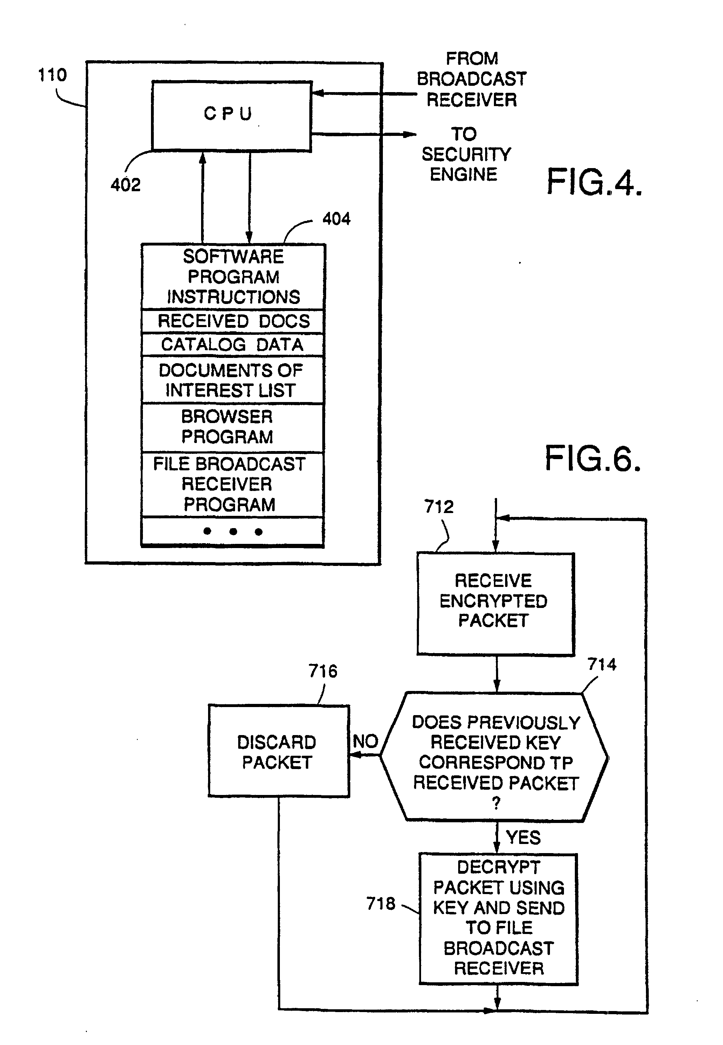

Fig. 4 is a detailed hardware block diagram of receiving computer 110 of Fig. 1. As shown in Fig. 4, receiving computer 110 is preferably a general purpose computer including a CPU 402 and a memory 404. CPU 402 can be any type of known CPU that is capable of performing the functions described below in connection with receiving computer 110. Similarly, memory 404 is a generally known type of memory capable of holding information, such as RAM, ROM, a floppy disk, a hard disk, etc.

Memory 404 includes a plurality of software programs that are executed by CPU 402 to perform functions F7, F8, F9, F13, and F14 described in connection with the table below. As can be seen from Fig. 1, receiving computer 110 includes both file broadcast receiver 112 and file browser 114. Both file broadcast receiver 112 and file browser 114 preferably are implemented as a plurality of software programs stored in memory 404 that are executed by CPU 402. As also shown in Fig. 1, file broadcast receiver 112 performs all interfacing to the "outside world" that is performed by receiving computer 110. File browser 114 only receives data from and sends data to file broadcast receiver 112 (although browser 114 also receives data from users during times when users are designating documents from the catalog).

Memory 404 also stores received documents and catalog data (including the document name, the document length, the origin of the document, the ownership of the document, the schedule on which the document is to be transmitted, e.g., periodically, or at a predetermined time or date, the cost to a user of receiving the document, a description of the document sufficient to allow a user to determine whether he desires the document, etc.). Memory 404 also stores a list of "documents of interest" which are the names of the documents designated by users browsing the catalog, and the account status (whether there is any credit remaining) of the ' receiving computer's account. The specific data and the format of the data stored in memory 204 may vary,

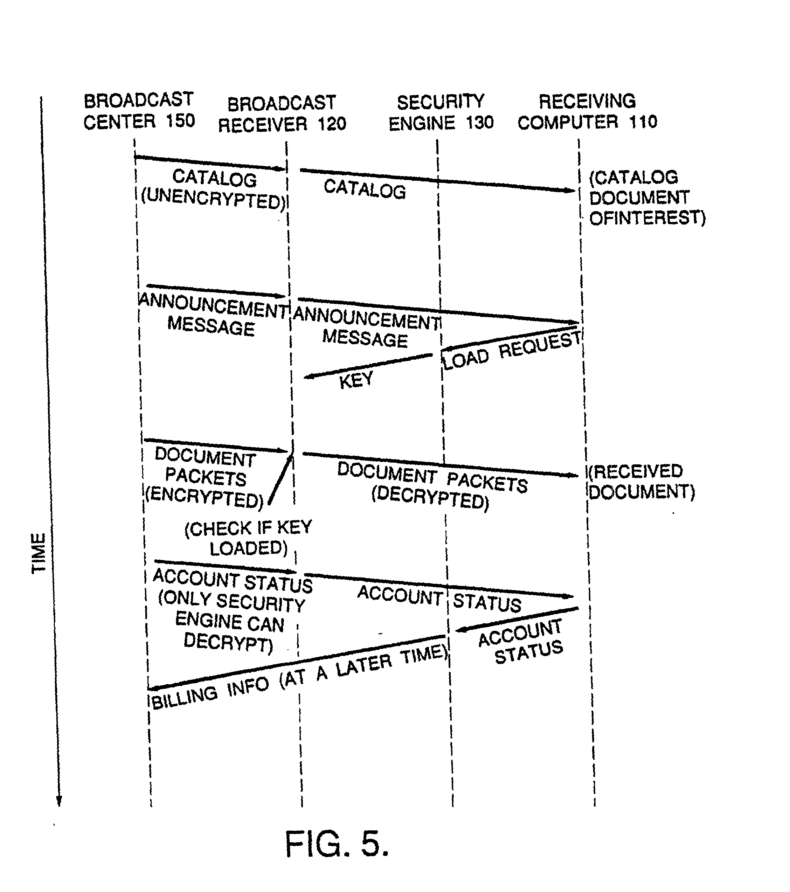

The following paragraphs present an overview of the operation of the disclosed receiving apparatus, with reference to the timing chart of Fig. 5. At a predetermined time interval, broadcast center 150 broadcasts the catalog "in the clear," i.e., in unencrypted form, to the plurality of receiving computers including receiving computer 110 using multicast addressing. The catalog preferably is broadcast in packet format. The described embodiment sends all packets in accordance with the IEEE 802.2 data communication standard. Broadcast receiver 120 receives the catalog and passes it to receiving computer 110. In receiving computer 110, the catalog is stored in memory 404, e.g., a hard disk. When a user, using file browser 114, designates a document from the catalog, broadcast file receiver 112 stores a document ID, e.g., a number or an unambiguous document name, in the list of "documents of interest" in memory 404.

Broadcast center 150 then proceeds to broadcast the documents listed in the catalog using multicast addressing. For each document, broadcast center 150 first multicasts an announcement message identifying the document to be sent next. The announcement message also includes a key seed ID identifying the key seed needed to decrypt the document. The announcement message is received and decrypted by broadcast receiver 120 and passed to file broadcast receiver 112. If the announced document is on the list of documents of interest, file broadcast receiver 112 sends a load request including the key seed ID to security engine 130. Security engine 130 determines if the user has sufficient credit and authorization to receive the document. If so, security engine 130 sends the key (obtained in accordance with the key seed ID) for the document to broadcast receiver 120.

After broadcast center 150 sends the announcement message for a document, it prepares to send the document itself. The document is packetized, encrypted, and broadcast over communications link 140. As broadcast receiver 120 receives each encrypted packet, it determines whether it is a packet for which broadcast receiver 120 has a key. Each document sent from broadcast center 150 is decrypted with a different key. If broadcast receiver 120 has received a correct key from security engine 130, it decrypts the packet and passes it to file broadcast receiver 112, where the packets of the received document are assembled in their correct order and stored in memory 404, e.g., on a hard disk. File broadcast receiver 112 then informs the user that the requested file has been received. In a preferred embodiment, all encryption is done using a symmetrical encoding scheme, such as the Data Encryption Standard (DES) method. Other embodiments may use a private key scheme for non-document data, e.g., billing information and key sets, sent between the broadcast center and the receiving station.

Another type of data transmitted by broadcast center 150 is account information. Account information is transmitted "in the clear," i.e., in unencrypted form, at least to the extent that broadcast receiver 120 does not decrypt it. The account information is passed through file broadcast receiver 112 and is passed to security engine 130 as account information. Security engine 130 decrypts the account information using a master key stored in memory 304. The account information includes key, seed, credit limit, etc. Since the account data is encrypted in a way that only the security engine 130 can decrypt, there is no need for the data to be further encrypted for transmission to the broadcast receiver 120. This allows for easier transmission of account information (the broadcast receiver 120 does not require a key to receive the account information) without compromising the security of the information (the data is still encrypted in a way that only the security engine 130 can decrypt).

Periodically, e.g., once a month, security engine 130 encrypts its billing information concerning documents received by receiving computer 110 during the past month and sends the encrypted billing information to broadcast center 150. This encryption is performed using a master key of broadcast center 150 that is stored in memory 304. This information may be encrypted using a symmetrical encryption method, such as DES or a private key method. Broadcast center 150 decrypts the received billing information using the master key and uses the decrypted information to send yet another updated account status to receiving computer 110.

The following table provides a list of the functions performed by the electronic document distribution system, according to which particular subsystem performs the function. These functions will be described in the following paragraphs, with reference to Figs. 1-5.

**TABLE:**

| **FUNCTIONS PERFORMED BY ELECTRONIC DOCUMENT DISTRIBUTION SYSTEM** | | |
|---|---|---|
| SUB-SYSTEM | FUNCTION | |
| **BROADCAST CENTER** | Send catalog (non-encrypted) | (F1) |
| | Receive and decrypt billing information | (F2) |
| | Periodically send account status (non-encrypted) and key seeds (encrypted) | (F3) |
| | Send announcement message, and packetize, encrypt, and send document | (F4) |
| **BROADCAST RECEIVER** | Receive and store key from security engine | (F5) |
| | Receive packet and decrypt it if key is correct | (F6) |
| **FILE BROADCAST RECEIVER** | Receive announcement message and load request | (F7) |
| | Receive document request and store document ID on list of documents of interest | (F8) |
| | Receive and process decrypted packet from broadcast receiver | (F9) |
| **SECURITY ENGINE** | Receive accounting statistics and key seeds and store them in memory | (F10) |
| | Periodically send billing information to broadcast center (encrypted) | (F11) |
| | Receive and process load request from file broadcast receiver | (F12) |
| **CATALOG BROWSER** | Receive and store new catalog | (F13) |
| | Display catalog and process document requests | (F14) |

Functions F1, F2, F3, and F4 are performed by the broadcast center 150 of Fig. 2. In executing function F1, broadcast center 150 broadcasts to all potential receiving computers a catalog listing all documents to be sent during an upcoming predetermined time period, e.g., over the next week. The catalog is sent "in the clear," i.e., unencrypted, because none of the receivers are charged a fee to receive the catalog and there is no reason to limit access to the catalog.

In executing function F2, broadcast center 150 receives encrypted billing information from security engine 130. Broadcast center 150 receives similar billing information from each receiving computer on the network. The billing information details which documents were received during the most recent billing period. The broadcast center 150 decrypts the billing information using a private key and stores the decrypted billing information in memory 204 to be used later in determining an account status and for actually invoicing the user for documents delivered.

In executing function F3, broadcast center 150 periodically, e.g., monthly, sends account status information to each of the plurality of receiving computers, including receiving computer 110. The account information is tailored to the receiving computer and includes a statement of its receiver's status (e.g., satisfactory, overdrawn, limited access, etc.). The account information also includes core information required by security engine 130 to create keys to decrypt electronic documents. Although the account information is broadcast in the clear, the contents of the account information is encrypted in such a way that only security engine 130 may access and decrypt the account information.

In executing function F4, broadcast center 150 determines that it is time to broadcast one of the documents listed in the catalog. Broadcast center 150 sends an announcement message, including a document ID for the document to be sent to all potential receivers the document ID identifying which key to use. The broadcast center 150 then packetizes, encrypts, and sends the document using an appropriate encryption key for that document. Each receiver has already decided whether it wishes to receive the transmitted document and thereafter be billed for the document.

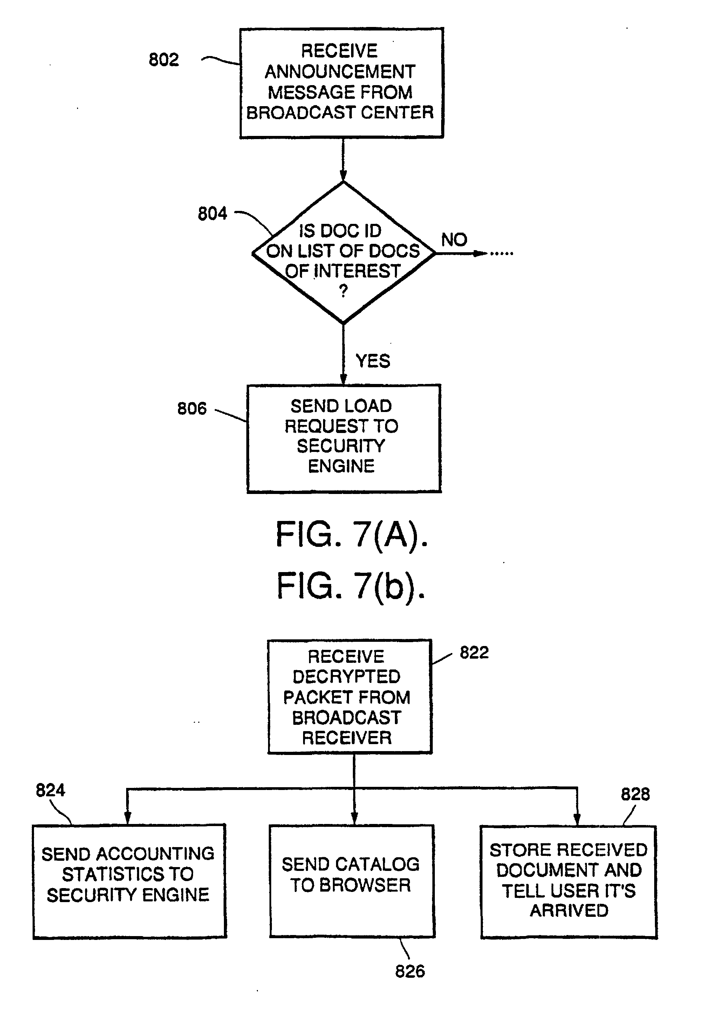

Functions F5 and F6 are performed by the broadcast receiver 120 of Fig. 1. Fig. 6 is a flowchart of steps performed in the execution of function F6.

In executing function F5, broadcast receiver 120 receives a key and a document ID for the document to be received next from security engine 130 on line 146 of Fig. 1. Note that the key is received only if the document is on the list of documents of interest in the memory of receiving computer 110, if an announcement message for the document was previously received from broadcast center 150, and if a load request was sent from file broadcast receiver 112 to the security engine 130. Furthermore, the security engine 130 must determine, using status and authorization information stored in its memory, that the user is authorized to access the document. The broadcast receiver 120 stores the received key in a memory or similar type of storage.

The execution of function F6 will be described with reference to Fig. 6. In step 712 of Fig. 6, broadcast receiver 120 receives an encrypted packet sent during the execution of function F4. In step 714, broadcast receiver 120 determines whether it has a key for the received packet. (The document ID is contained in each packet.) If so, broadcast receiver 120 decrypts the received packet in step 718 using the key received during the execution of function F5. Thus, each packet is decrypted as it is received and it is not necessary to store an entire encrypted document or large parts of an encrypted document before the document in decrypted. This immediate decryption results in a savings of memory space in memory 404 because an encrypted and a decrypted version of the same document do not have to simultaneously reside on a disk or in memory. If a corresponding key is not loaded, the received packet is discarded in step 716. In either case, control returns to step 712 to await more data.

Functions F7, F8, and F9 are performed by the file broadcast receiver 112 of Fig. 1. Figs. 7(a) and 7(b) are flowcharts of steps performed in the execution of functions F7 and F9, respectively.

The execution of function F7 will be described with reference to Fig. 7(a). In step 802 of Fig. 7(a), file broadcast receiver 112 receives the announcement message for a document and, in step 804, determines whether the document ID in the announcement message is contained in the list of documents of interest in memory 404. If so, file broadcast receiver 112 sends a load request to security engine 130 in step 806. The load request contains, e.g., the document ID from the announcement message, so that security engine 130 can send a corresponding key to broadcast receiver 120.

In the execution of function F8, file broadcast receiver 112 receives a document request from file browser 114 indicating a document in the catalog that the user wishes to receive. It should be noted that the user can be either a person interfacing with the file browser through a text or GUI interface or, alternately, that the user can be another computer or computer program interfacing with the catalog and file browser 114 through a predetermined protocol. The file broadcast receïver 112 then adds the document ID of the document designated by the user to the list of documents of interest in memory 404.

The execution of function F9 will be described with reference to Fig. 7(b). In step 822 of Fig. 7(b) file broadcast receiver 112 receives a decrypted packet from broadcast receiver 120. In accordance with a field in the received packet identifying the packet type, file broadcast receiver 112 performs one of three actions. In step 824, if the received packet contains account status information, file broadcast receiver 112 sends it to security engine 130. In step 826, if the received packet includes catalog information, file broadcast receiver 112 stores it in memory 404 and preferably informs file browser 114 that a new catalog has been received.

In step 828, if the received packet is a decrypted part of a document requested by the user, file broadcast receiver 112 stores the packet, along with other packets to recreate the requested document, and informs the user that the document has been received. Note that, once a document has been received and stored in memory 404 it may be processed and/or reviewed by a user without any interaction with broadcast receiver 120 or security engine 130.

As described above, file broadcast receiver 112 pieces electronic documents back together from individual broadcast packets. If the broadcast medium has a low enough bit error rate and a high enough availability, an electronic document will be correctly delivered after only one transmission. For broadcast media where this is not the case however, file broadcast receiver 112 and broadcast center 150 may use either of two techniques to ensure the reliable delivery of broadcast documents. In both cases, file broadcast receiver 112 stores the partially assembled document and a record of the missing pieces (gaps) within the document in a suitable memory. File broadcast receiver 112 fills in the gaps as the missing pieces are retransmitted by broadcast center 150. Security engine 130 keeps just a single billing record per document even if it receives repeated load requests for a single document. The two techniques are: 1) scheduled transmission, in which broadcast center 150 repeatedly transmits the entire document, i.e., transmits it several times in a row to fill in the gaps on the receive side, and 2) requested transmission, where file broadcast receiver 112 requests retransmission of just the gaps via a separate network. The separate network could be, for example, link 144 used for sending billing records to broadcast center 150 or some other link or communication channel.

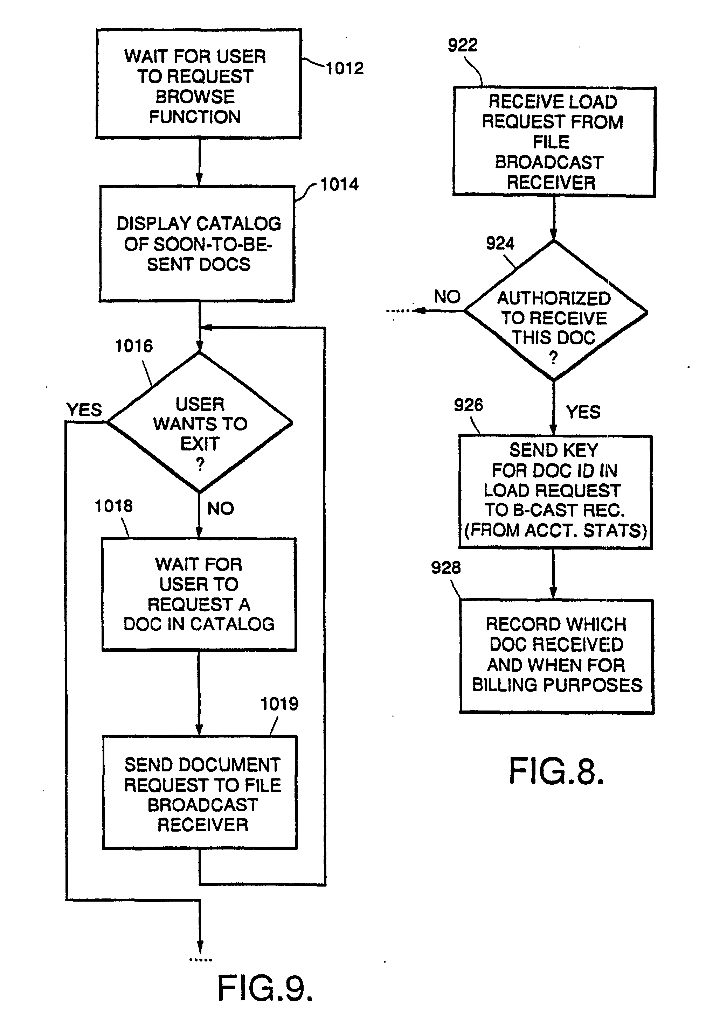

Functions F10, F11, and F12 are performed by the security engine 130 of Fig. 1. Fig. 8 is a flowchart of steps performed by security engine 130 in the execution of function F12.

In the execution of function F10, security engine 130 receives account status information from broadcast center 150. The key seeds are an important component of the account information because the key seeds are used to produce the keys needed by broadcast receiver 120 for decryption of documents. The set of key seeds used by broadcast center 150 is changed periodically. Broadcast center 150 can disable a receiver's ability to receive by withholding key seeds.

When a load request is delivered to security engine 130, security engine 130 produces a key for decryption of the document from the contents of the announcement message and a key seed using a keyed one-way hash function. Keyed one-way hash functions produce an output that is a function of both an input string (e.g., a document ID) and a key (e.g., a key seed). Thus, only someone with the key can calculate the hash output value. One type of a keyed one-way hash function is called a "MAC," which stands for Message Authentication Code.

The following paragraphs describe two keyed one-way hash functions that are preferably used in various implementations of the present invention. A first function encrypts a message with a block algorithm in CFB mode. The hash is the last encrypted block encrypted once more in CFB mode. This technique is described in ANSI X9.9 and ISO 9797. A second function is called RIPE-MAC and uses DES (Data Encryption Standard). More details of this function can be found in the book "Applied Cryptography" by Bruce Schneier. Other hash functions could also be used.

The keyed one-way hash function is also used to create a "checksum" for the billing report. The checksum can be created only with the key. When broadcast center 150 receives a billing report with a valid checksum, the checksum ensures that the report was created by a party having the key. As long as the key is kept private in broadcast center 150 and in security engine 130, falsified or modified billing information can be detected by broadcast center 150.

In the execution of function F11, security engine 130 periodically, e.g., monthly, sends billing information to broadcast center 150. The billing information details which documents were received (by document ID) and when they were received during the billing period. Security engine 130 encrypts the billing information using a public key of broadcast center 150. Alternately, the billing information may be protected by a checksum but not encrypted. The public key is part of the account information sent to security engine 130 in encrypted form. Security engine 130 reports billing information to broadcast center 150 under several circumstances, periodically, on receipt of a message requesting that billing information be sent, when the billing record is reaching a predetermined memory capacity, or when the credit limit is close to being reached.

The execution of function F12 will be described with reference to Fig. 8. In step 922 of Fig. 8, security engine 130 receives a load request from file broadcast receiver 112. In step 824, security engine 130 checks the credit limit and authorization status of receiving computer 110. If receiving computer 110 is authorized to receive the requested document, security engine 130, in step 926, sends a key and a document ID from the account information in memory 304 corresponding to a document ID in the load request to broadcast receiver 120. In step 928, security engine 130 records the document ID of the document to be received into memory. This information is periodically sent to broadcast center 150 for billing purposes. Security engine 130 also maintains a running credit limit value in memory. The credit limit is debited when document requests are made and credited on receipt of account status information indicating the receiver has paid all or part of its bill.

Functions F13 and F14 are performed by the file browser 114 of Fig. 1. Fig. 9 is a flowchart of steps performed by file browser 114 during the execution of function F14.

In the execution of function F13, file browser 114 receives new catalog data from file broadcast receiver 112 and stores the catalog information in memory 404. Alternatively, file broadcast receiver 112 handles storing the catalog information in memory and merely informs file browser 114 that a new catalog has been received.

The execution of function F14 will be described with reference to Fig. 9. In step 1012 of Fig. 9, file browser 114 waits for a user to request a "catalog browse" function. When such a request occurs, file browser 114 in step 1014 displays all or part of the current catalog and allows the user to browse through the catalog using a known user interface. A catalog may contain hundreds or thousands of entries. After the catalog is displayed, the user may in step 1016 choose to exit the system. If the user stays, then in step 1018 the user designates one of the files in the catalog stored in memory 404. In step 1019 file browser 114 sends a document request to file broadcast receiver 112 containing a document ID corresponding to the document designated by the user. As discussed above, a document request causes file broadcast receiver 112 to issue a load request to security engine 130, which sends a key to broadcast receiver 120 so that broadcast receiver 120 will decrypt the packets of the document when they are received.

Thus, use of a catalog presents a convenient method for a user to determine which documents to receive. Use of a catalog also allows the user to completely control which documents are received and thus prevents wasting resources on the reception of documents not of interest.

In summary, billing information is stored in a secure fashion in security engine 130 and sent periodically to broadcast center 150. The billing information is protected against tampering by a keyed checksum using a key known only by the security engine 130 and the broadcast center 150. In addition, the billing information includes an encrypted checksum. Encryption of the billing information makes it more difficult for users to falsify their billing information and makes it simpler for a central billing authority to detect tampering with billing information.

Security is dependent on keeping the "engine private key" private, both within broadcast center 150 and within security engine 130. The engine private key is used to decrypt the account information sent from broadcast center 150 to security engine 130 and should it become known, unauthorized users would gain access to the key seeds needed to decrypt documents.

The disclosed receiving apparatus is very secure. The only keys that appear "in the clear" where they could be misappropriated are the keys for documents for which the user is being billed, i.e., keys sent to broadcast receiver 120. This key is of limited value because the user will soon have a complete copy of the document corresponding to the key.

Other embodiments will be apparent to those skilled in the art from consideration of the specification and practice of the invention disclosed herein. It is intended that the specification and examples be considered as exemplary only, with a true scope of the invention being indicated by the following claims.

## Claims

1. A receiving apparatus (110) for use in a document delivery system having a broadcast apparatus (150) that sends a document as a plurality of encrypted packets and sends account information including key seeds to said receiving apparatus (110) without said receiving apparatus (110) having requested the document, said receiving apparatus (110) comprising:
a memory (404);
a receiving unit (402) that receives and decrypts the encrypted packets and stores only the decrypted packets in said memory (404); and
a security engine (130) that generates keys used by said receiving unit (402) to decrypt the encrypted packets in accordance with a one-way hashing method based on a document identification number of the document and one of the key seeds,
wherein
the broadcast apparatus (150) sends the document identification number in an announcement message prior to sending the document

2. A receiving apparatus according to claim 1 wherein the broadcast apparatus (150) sends the document using multicast addressing

3. A receiving apparatus according to claim 1 wherein said receiving apparatus (110) further comprises a billing information generator that generates a billing report for a decrypted document by a method including using the one-way hashing method.

4. A receiving apparatus (110) according to claim 1,2 or 3 wherein said in a receiving unit (402) receives, decrypts and stores the packets for a document at a first time ; and said receiving apparatus further comprises billing information sending means for providing encrypted billing information to the broadcast center over a nonsatellite communication link (144) at a time later than the first time.

5. A receiving apparatus according to claims 1 or 2
wherein the broadcast center sends the document according to a predetermined schedule.

6. A receiving apparatus according to Claim 1, wherein when an encrypted packet from a sending of the document is not received, the receiving unit (402) requests retransmission of the packet from the broadcast apparatus (150) so as to fill in a gap in the reassembled document.

7. A receiving apparatus according to Claim 1 wherein the document comprises one or more of text, software, an image, and video.

8. A receiving apparatus according to Claim 1, wherein the broadcast apparatus (150) broadcasts the document on a first communication link (142) that is faster than a second communication link (144) used by said receiving apparatus to communicate with the broadcast apparatus.

9. A receiving apparatus according to Claim 8, wherein the first (142) and second (144) communication links are satellite and dial-up modem links respectively.

10. A receiving apparatus according to claim 1, wherein the broadcast apparatus (150) also sends a catalog, and
wherein said receiving apparatus (110) further comprises a file browser (114) including means for receiving user input indicating a requested document in the catalog and means for sending a load request of the requested document to said security engine in response to receipt of the input.

11. A receiving apparatus according to Claim 1, wherein the broadcast apparatus (150) sends the announcement message using multicast addressing.

12. A method for document delivery in a network system, including the steps of:
sending, by a broadcast center (150) in the network, a document as a plurality of encrypted packets;
connecting a communication link to the broadcast center (150);
decrypting a received packet, in a receiving computer (110) connected to the communication link, the receiving computer (110) including a memory (404) and a broadcast receiver (120), wherein the broadest receiver (120) performs the decrypting step on the packet as it is received and stores only the decrypted received packet in memory (404) so as to reassemble the document in order;
sending, by the broadcast center (150), account information including key seeds to a security engine (130) in the receiving computer (110); and
generating, by the security engine (130), keys used by the broadcast receiver (402) to decrypt the received packets in accordance with a one-way hashing method based on a document number of the sent document and one of the key seeds,
wherein
the broadcast center (150) sends the document identification number in an announcement message prior to sending the document.

13. A method according to claim 12 wherein the broadcast center (150) sends the document using multicast addressing.

14. A method according to claim 12 wherein
said receiving computer (110) further comprises a billing information generator that generates a billing report for a decrypted document by a method including using the one-way hashing method.

## Patentansprüche

1. Empfangsvorrichtung bzw. -gerät (110) für eine Verwendung in einem Dokumentliefersystem, welches eine Übersendungs- bzw. Übertragungsvorrichtung (150), welche ein Dokument als eine Vielzahl von verschlüsselten Paketen sendet und Rechnungsinformation, beinhaltend Schlüsselbasisdaten bzw. Schlüsselkeime, an die Empfangsvorrichtung (110) sendet, ohne daß die Empfangsvorrichtung (110) das Dokument angefordert hat, wobei die Empfangsvorrichtung (110) umfaßt:
einen Speicher (404);
eine empfangende bzw. Empfangseinheit (402), welche die verschlüsselten Pakete empfängt und entschlüsselt und nur die entschlüsselten Pakete in dem Speicher (404) speichert; und
eine Sicherheitsmaschine (130), welche Schlüssel erzeugt, welche durch die Empfangseinheit (402) verwendet werden, um die verschlüsselten Pakete in Übereinstimmung mit einem Einweg-Hashing- bzw.-Tabellenorganisationsverfahren basierend auf einer Dokumenten-Identifikationsnummer des Dokuments und einem der Schlüsselbasiselernente zu entschlüsseln,
worin die Übersendungsvorrichtung (150) die Dokumenten-Identifikationsnummer in einer Ankündigungsbotschaft vor einem Senden des Dokuments sendet.

2. Empfangsvorrichtung nach Anspruch 1, worin die Übersendungsvorrichtung (150) das Dokument unter Verwendung eines Multicast-Adressierens sendet.

3. Empfangsvorrichtung nach Anspruch 1, worin die Empfangsvorrichtung (110) weiters einen Rechnungsinformations-Generator umfaßt, welcher einen Rechnungsbericht für ein entschlüsseltes Dokument durch ein Verfahren unter Verwendung des Elnweg-Tabellenorganisationsverfahrens generiert bzw. erzeugt.

4. Empfangsvorrichtung (110) nach Anspruch 1, 2 oder 3, worin die Empfangseinheit (402) die Pakete für ein Dokument zu einem ersten Zeitpunkt entschlüsselt und speichert; und
die Empfangsvorrichtung weiters Rechnungsinformations-Sendemittel bzw. -einrichtungen für ein Bereitstellen von verschlüsselter Rechnungsinformation an das Übertragungszentrum über eine Nichtsatelliten-Kommunikationsverbindung (144) zu einem Zeitpunkt später als dem ersten Zeitpunkt umfaßt.

5. Empfangsvorrichtung nach Anspruch 1 oder 2, worin das Übertragungszentrum das Dokument gemäß einem vorbestimmten Plan bzw. Verzeichnis sendet.

6. Empfangsvorrichtung nach Anspruch 1, worin, wenn ein verschlüsseltes Paket von einem Senden des Dokuments nicht erhalten wird, die Empfangseinheit (402) eine neuerliche Übertragung des Pakets von der Übertragungsvorrichtung (150) anfordert, um eine Lücke in dem neu zusammengebauten Dokument zu füllen.

7. Empfangsvorrichtung nach Anspruch 1, worin das Dokument eines oder mehreres von Text, Software, einem Bild und einem Video umfaßt.

8. Empfangsvorrichtung nach Anspruch 1, worin die Übertragungsvorrichtung (150) das Dokument auf einer ersten Kommunikationsverbindung (142) überträgt, welche schneller ist als eine zweite Kommunikationsverbindung (144), welche durch die Empfangsvorrichtung verwendet wird, um mit der Übertragungsvorrichtung zu kommunizieren.

9. Empfangsvorrichtung nach Anspruch 8, worin die erste (142) und zweite (144) Kommunikationsverbindung eine Satellitenverbindung bzw. ein Wählmodem sind.

10. Empfangsvorrichtung nach Anspruch 1, worin die Übertragungsvorrichtung (150) auch einen Katalog sendet, und
worin die Empfangsvorrichtung (110) weiters einen Filebrowser (114) umfaßt, welcher Mittel zum Empfangen einer Benutzereingabe, welche ein angefordertes Dokument in dem Katalog anzeigt, und Mittel zum Senden einer Ladeanforderung des angeforderten Dokuments an die Sicherheitsmaschine in Antwort auf einen Empfang der Eingabe beinhaltet.

11. Empfangsvorrichtung nach Anspruch 1, worin die Übertragungsvorrichtung (150) die Ankündigungsbotschaft unter Verwendung eines Multicast-Adressierens sendet.

12. Verfahren für eine Dokumentenlieferung in ein Netzwerksystem, beinhaltend die Schritte:
Senden eines Dokuments als eine Vielzahl von verschlüsselten Paketen durch ein Übertragungszentrum (150) in dem Netzwerk;
Verbinden bzw. Herstellen einer Kommunikationsverbindung mit dem Übertragungszentrum (150);
Entschlüsseln eines empfangenen Pakets in einem empfangenden bzw. Empfangscomputer (110), welcher mit der Kommunikationsverbindung verbunden wird, wobei der Empfangscomputer (110) einen Speicher (404) und einen Übertragungsempfänger (120) beinhaltet, worin der weiteste Empfänger (120) den Entschlüsselungsschritt an dem Paket durchführt, wenn es empfangen wird, und nur das entschlüsselte, empfangene Paket in dem Speicher (404) speichert, um das Dokument in seiner Reihenfolge zusammenzusetzen;
Senden durch das Übertragungszentrum (150) einer Rechnungsinformation, beinhaltend Schlüsselbasiselemente bzw. Schlüsselkeime, an eine Sicherheitsmaschine (130) in dem empfangenden Computer (110); und
Erzeugen durch die Sicherheitsmaschine (130) von Schlüsseln, welche durch den Übertragungsempfänger (402) verwendet werden, um die empfangenen Pakete in Übereinstimmung mit einer Einweg-Hashing- bzw.-Tabellenorganisationsmethode basierend auf einer Dokumentenzahl des gesendeten Dokuments und einem der Schlüsselbasiselemente zu entschlüsseln,
worin das Übertragungszentrum (150) die Dokumenten-Identifikationsnummer in einer Ankündigungsbotschaft vor einem Senden des Dokuments sendet.

13. Verfahren nach Anspruch 12, worin die Übersendungsvorrichtung (150) das Dokument unter Verwendung eines Multicast-Adressierens sendet.

14. Verfahren nach Anspruch 12, worin die Empfangsvorrichtung (110) weiters einen Rechnungsinformations-Generator umfaßt, welcher einen Rechnungsbericht für ein entschlüsseltes Dokument durch ein Verfahren unter Verwendung des Einweg-Tabellenorganisationsverfahrens generiert bzw. erzeugt.

## Revendications

1. Dispositif de réception (110) à utiliser dans un système de distribution de documents ayant un dispositif de radiodiffusion (150) qui envoie un document sous la forme d'une pluralité de paquets cryptés et envoie des informations de comptabilité incluant des bases de clés audit dispositif de réception (110) sans que ledit dispositif de réception (110) n'ait demandé le document, ledit dispositif de réception (110) comportant :
une mémoire (404),
une unité de réception (402) qui reçoit et décrypte les paquets cryptés et mémorise uniquement les paquets décryptés dans ladite mémoire (404), et
un moteur de sécurité (130) qui génère des clés utilisées par ladite unité de réception (402) pour décrypter les paquets cryptés conformément à un procédé de hachage unidirectionnel sur la base d'un numéro d'identification de document du document et de l'une des bases de clés,
dans lequel le dispositif de radiodiffusion (150) envoie le numéro d'identification de document dans un message enregistré avant d'envoyer le document.

2. Dispositif de réception selon la revendication 1, dans lequel le dispositif de radiodiffusion (150) envoie le document en utilisant une adresse multidestinataire.

3. Dispositif de réception selon la revendication 1, dans lequel ledit dispositif de réception (110) comporte en outre un générateur d'informations de facturation qui génère un rapport de facturation pour un document décrypté à l'aide d'un procédé, y compris l'utilisation du procédé de hachage unidirectionnel.

4. Dispositif de réception (110) selon la revendication 1, 2 ou 3, dans lequel ladite unité de réception (402) reçoit, décrypte et mémorise les paquets concernant un document à un premier instant, et
ledit dispositif de réception comporte en outre
des moyens d'envoi d'informations de facturation pour fournir des informations de facturation cryptées au centre de radiodiffusion sur une liaison de communication non par satellite (144) à un instant ultérieur au premier instant.

5. Dispositif de réception selon les revendications 1 ou 2,
dans lequel le centre de radiodiffusion envoie le document conformément à une planification prédéterminée.

6. Dispositif de réception selon la revendication 1, dans lequel lorsqu'un paquet crypté depuis l'envoi du document n'est pas reçu, l'unité de réception (402) demande la retransmission du paquet depuis le dispositif de radiodiffusion (150) de manière à remplir un emplacement vide dans le document réassemblé.

7. Dispositif de réception selon la revendication 1, dans lequel le document comporte un ou plusieurs éléments parmi un texte, un logiciel, une image, et une vidéo.

8. Dispositif de réception selon la revendication 1, dans lequel le dispositif de radiodiffusion (150) diffuse le document sur une première liaison de communication (142) qui est plus rapide qu'une seconde liaison de communication (144) utilisée par ledit dispositif de réception pour communiquer avec le dispositif de radiodiffusion.

9. Dispositif de réception selon la revendication 8, dans lequel les première (142) et seconde (144) liaisons de communication sont des liaisons de communication par satellite et par modem commuté, respectivement.

10. Dispositif de réception selon la revendication 1, dans lequel le dispositif de radiodiffusion (150) envoie également un catalogue, et
dans lequel ledit dispositif de réception (110) comporte en outre un navigateur de fichiers (114) incluant des moyens pour recevoir une entrée utilisateur indiquant un document demandé dans le catalogue et des moyens pour envoyer une demande de téléchargement du document demandé audit moteur de sécurité en réponse à la réception de l'entrée.

11. Dispositif de réception selon la revendication 1, dans lequel le dispositif de radiodiffusion (150) envoie le message enregistré en utilisant une adresse multidestinataire.

12. Procédé pour une distribution de documents dans un système de réseau, incluant les étapes consistant à :
envoyer, par un centre de radiodiffusion (150) du réseau, un document sous la forme d'une pluralité de paquets cryptés,
connecter une liaison de communication au centre de radiodiffusion (150),
décrypter un paquet reçu, dans un ordinateur de réception (110) connecté à la liaison de communication, l'ordinateur de réception (110) incluant une mémoire (404) et un récepteur de radiodiffusion (120), dans lequel le récepteur de radiodiffusion (120) effectue l'étape de décryptage du paquet lorsqu'il est reçu et mémorise seulement le paquet reçu décrypté dans la mémoire (404) de manière à réassembler le document dans l'ordre,
envoyer, par le centre de radiodiffusion (150), des informations de comptabilité incluant des bases de clés à un moteur de sécurité (130) de l'ordinateur de réception (110), et
générer, par le moteur de sécurité (130), des clés utilisées par le récepteur de radiodiffusion (402) pour décrypter les paquets reçus conformément à un procédé de hachage unidirectionnel sur la base d'un numéro de document du document envoyé et de l'une des bases de clés,
dans lequel le centre de radiodiffusion (150) envoie le numéro d'identification de document dans un message enregistré avant d'envoyer le document.

13. Procédé selon la revendication 12, dans lequel
le centre de radiodiffusion (150) envoie le document en utilisant une adresse multidestinataire.

14. Procédé selon la revendication 12, dans lequel
ledit ordinateur de réception (110) comporte en outre un générateur d'informations de facturation qui génère un rapport de facturation pour un document décrypté à l'aide d'un procédé, y compris l'utilisation du procédé de hachage unidirectionnel.
